# EUROPÄISCHE PATENTSCHRIFT

(11) **EP 3 142 538 B1**
(45) Veröffentlichungstag und Bekanntmachung des Hinweises auf die Patenterteilung: **16.03.2022**
(21) Anmeldenummer: 15718888.9
(22) Anmeldetag: 28.04.2015
(51) Int. Cl.: A47L 15/00, H04L 12/28, A47L 15/42

(54) **WASSERFÜHRENDES HAUSHALTSGERÄT**
WATER-CARRYING HOUSEHOLD APPLIANCE
APPAREIL ÉLECTROMÉNAGER À CIRCULATION D'EAU

(30) Priorität: 12.05.2014 DE 102014208861
(43) Veröffentlichungstag der Anmeldung: 22.03.2017
(73) Patentinhaber: BSH Hausgeräte GmbH, 81739 München (DE)
(72) Erfinder: HEILIGENMANN, Caroline, 71032 Boeblingen (DE)
(86) Internationale Anmeldenummer: PCT/EP2015/059204
(87) Internationale Veröffentlichungsnummer: WO 2015/173010

(56) Entgegenhaltungen:
- EP-A1- 2 630 904
- WO-A2-01/96645
- DE-U1- 29 622 066
- US-A1- 2008 140 862

## Beschreibung

Die Erfindung betrifft ein wasserführendes Haushaltsgerät, das als eine Geschirrspülmaschine oder eine Haushaltsgeschirrspülmaschine ausgebildet ist, sowie ein Verfahren zum Betreiben eines wasserführenden Haushaltsgeräts.

Geschirrspülmaschinen weisen einen Spülbehälter auf, der zur Aufnahme von Spülgut vorgesehen ist. Der Spülbehälter ist mit einer Tür verschließbar und umfasst eine mit einem Deckel verschließbare Aufnahmevorrichtung zur Aufnahme zumindest eines Spülmittels, das für eine Reinigung des Spülguts während eines Spülprogramms vorgesehen ist. Um eine konventionelle Geschirrspülmaschine zu starten, wird üblicherweise unter anderem zunächst ein Spülmittel, wie zum Beispiel ein Pulver oder ein Tab, in die Aufnahmevorrichtung eingefüllt. Anschließend werden der Deckel der Aufnahmevorrichtung und dann die Tür der Geschirrspülmaschine geschlossen. Danach wird ein Hauptschalter der Geschirrspülmaschine betätigt, ein Spülprogramm, möglicherweise auch Sonderoptionen ausgewählt, und dann die Start-Taste betätigt.

Die EP 2 630 904 A1 beschreibt ein Haushaltsgerät mit einer Kommunikationseinrichtung, welches mittels einem mobilen Gerät bedienbar ist. Die DE 296 22 066 U 1 zeigt ein weiteres herkömmliches Haushaltsgerät, welches mittels einem von dem Haushaltsgerät abkoppelbaren Bedien- und/oder Anzeigeelement fernbedienbar und/oder überwachbar ist. Die US 2008/0140862 A1 offenbart ein über ein Kommunikationsnetzwerk netzwerkfähiges Haushaltsgerät mit einer Anzahl von miteinander verbundenen Komponenten und mit einer Uhren-Einrichtung. Die mit dem Kommunikationsnetzwerk verbundenen Teile können mittels einer Softwarearchitektur Nachrichten, wie beispielsweise Steuerbefehle, austauschen. Weiterer Stand der Technik ist der WO 01/96645 A2 zu entnehmen.

Vor diesem Hintergrund besteht eine Aufgabe der vorliegenden Erfindung darin, ein verbessertes wasserführendes Haushaltsgerät welches als Geschirrspülmaschine ausgebildet ist, zu schaffen.

Demgemäß wird ein wasserführendes Haushaltsgerät, das als eine Geschirrspülmaschine ausgebildet ist, vorgeschlagen, mit einer Empfangseinheit zum Empfangen zumindest eines Signals von einer mit dem Haushaltsgerät gekoppelten externen Vorrichtung, wobei das Signal eine Information enthält, welche indikativ für ein in einem Spülbehälter der Geschirrspülmaschine angeordnetes Spülgut und/oder eine Anschmutzung des Spülguts ist, einer Anzahl von Aktuatoren zur Durchführung einer Mehrzahl von Programmen, einer Auswahleinheit zum Wählen eines Programms aus der Mehrzahl der Programme in Abhängigkeit von dem empfangenen zumindest einen Signal, und einer Ansteuereinheit, welche dazu eingerichtet ist, die Aktuatoren zur Ausführung des gewählten Programms anzusteuern.

Erfindungsgemäß ist das wasserführende Haushaltsgerätiet eine Geschirrspülmaschine, insbesondere eine Haushaltsgeschirrspülmaschine. Beispiele für Aktuatoren der Geschirrspülmaschine sind Ventile, Heizeinrichtungen, Pumpen, Lüfter, der Motor für die Wasserweiche und der Pumpenmotor.

Das Signal beinhaltet eine Information, welche indikativ für das in dem Spülbehälter der Geschirrspülmaschine angeordnete Spülgut ist. Das Signal kann auch eine Information umfassen, welche die zu erwartende Anschmutzung des Geschirrs angibt.

Beispielsweise verfügt ein intelligenter Kühlschrank über Informationen hinsichtlich der in ihm aufbewahrten Lebensmittel. Aus diesen Informationen kann die spätere Verschmutzung des Spülguts abgeleitet werden. Wenn die externe Vorrichtung, also die außerhalb des wasserführenden Haushaltsgeräts angeordnete Vorrichtung, beispielsweise ein Benutzerendgerät ist, wie ein Tablet oder Smartphone, über welches der Benutzer seine Einkaufsliste verwalten kann, so kann aus der Einkaufsliste auch das Signal erzeugt werden, welches indikativ für die Anschmutzung des Spülguts, beispielsweise des Geschirrs, ist.

Gemäß einer Ausführungsform ist die Auswahleinheit dazu eingerichtet, ein Programm aus der Mehrzahl der Programme und eine Dosierung eines Spülmittels aus einer Spülmittelzugabe des Haushaltgeräts in Abhängigkeit von dem empfangenen zumindest einen Signal zu wählen.

Gemäß einer weiteren Ausführungsform ist die Ansteuereinheit dazu eingerichtet, die Aktuatoren zur Ausführung des gewählten Programms mit der gewählten Dosierung des Spülmittels anzusteuern.

Gemäß einer weiteren Ausführungsform ist die Ansteuereinheit dazu eingerichtet, ein Programm aus der Mehrzahl der Programme, eine Dosierung eines Spülmittels aus der Spülmittelzugabe und eine Dosierung einer Spülflotte aus einem Flottenspeicher des Haushaltsgeräts in Abhängigkeit von dem empfangenen zumindest einen Signal zu wählen.

Gemäß einer weiteren Ausführungsform ist die Ansteuereinheit dazu eingerichtet, die Aktuatoren zur Ausführung des gewählten Programms mit der gewählten Dosierung des Spülmittels und der gewählten Dosierung der Spülflotte anzusteuern.

Gemäß einer weiteren Ausführungsform weist das Haushaltsgerät eine mit der Auswahleinheit gekoppelte Benutzerschnittstelle zum Ausgeben des von der Auswahleinheit gewählten Programms und zum Steuern der Ansteuereinheit auf.

Gemäß einer weiteren Ausführungsform ist die Auswahleinheit dazu eingerichtet, ein Programm aus der Mehrzahl der Programme in Abhängigkeit von dem empfangenen zumindest einen Signal und eines aktuellen Zeitpunkts zu wählen.

Gemäß einer weiteren Ausführungsform ist die Empfangseinheit dazu eingerichtet, eine Mehrzahl von Signalen von einer Mehrzahl von mit dem Haushaltsgerät gekoppelten externen Vorrichtungen zu empfangen.

Gemäß einer weiteren Ausführungsform ist die Auswahleinheit dazu eingerichtet, ein Programm aus der Mehrzahl der Programme in Abhängigkeit von der Mehrzahl der empfangenen Signale auszuwählen.

Gemäß einer weiteren Ausführungsform ist die mit dem Haushaltsgerät gekoppelte externe Vorrichtung ein Kältegerät, ein Gargerät, eine Dunstabzugshaube, eine Kamera oder ein Benutzerendgerät ist.

Die jeweilige Einheit, zum Beispiel die Auswahleinheit oder die Ansteuereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ferner wird ein Verfahren zum Betreiben des wasserführenden Haushaltsgerätes, welches als Geschirrspülmaschine ausgebildet ist, vorgeschlagen, welches eine Anzahl von Aktuatoren zur Durchführung einer Mehrzahl von Programmen aufweist. Das Verfahren umfasst die Schritte: Empfangen zumindest eines Signals von einer mit dem Haushaltsgerät gekoppelten externen Vorrichtung, Wählen eines Programms aus der Mehrzahl der Programme in Abhängigkeit von dem empfangenen zumindest einen Signal, und Ansteuern der Aktuatoren derart, dass das gewählte Programm ausgeführt wird.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht einer ersten Ausführungsform einer Geschirrspülmaschine;
Fig. 2 zeigt eine schematische Ansicht einer zweiten Ausführungsform einer Geschirrspülmaschine; und
Fig. 3 zeigt ein schematisches Ablaufdiagramm eines Ausführungsbeispiels eines Verfahrens zum Betreiben einer Geschirrspülmaschine.

In den Figuren sind gleiche oder funktionsgleiche Elemente mit denselben Bezugszeichen versehen worden, sofern nichts anderes angegeben ist.

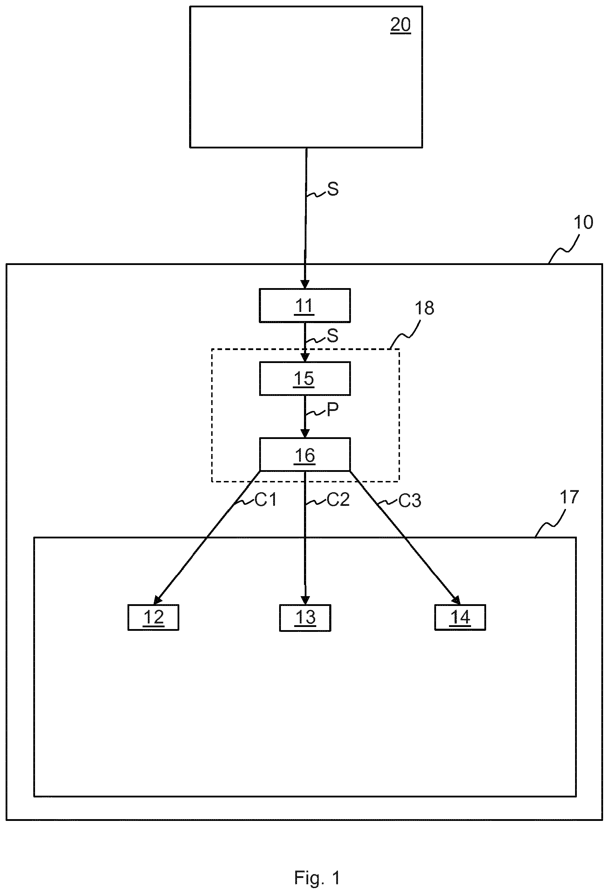

In Fig. 1 ist eine schematische Ansicht einer ersten Ausführungsform einer Geschirrspülmaschine 10 dargestellt.

Die Geschirrspülmaschine 10 der Fig. 1 weist eine Empfangseinheit 11, drei Aktuatoren 12, 13, 14, eine Auswahleinheit 15 und eine Ansteuereinheit 16 auf. Die Aktuatoren 12 - 14 können beispielsweise Ventile, Heizeinrichtungen, Pumpen, Lüfter, der Motor der Wasserweiche oder der Pumpenmotor sein.

In dem Beispiel der Fig. 1 sind die Aktuatoren 12 - 14 in dem Spülbehälter 17 der Geschirrspülmaschine 10 angeordnet. Die Auswahleinheit 15 und die Ansteuereinheit 16 sind in der Gerätesteuerung 18 der Geschirrspülmaschine 10 integriert. Die Geschirrspülmaschine 10 ist mit einer externen Vorrichtung 20 gekoppelt. Über die Kopplung zwischen der Geschirrspülmaschine 10 und der externen Vorrichtung 20 können Signale und/oder Nachrichten übertragen werden. Die Kopplung zwischen der Geschirrspülmaschine 10 und der externen Vorrichtung 20 kann leitungsgebunden oder drahtlos ausgebildet sein. Beispiele hierfür sind eine Leitung oder eine Funkschnittstelle.

Die externe Vorrichtung 20 ist beispielsweise ein Kältegerät, wie ein Kühlschrank, ein Gargerät, wie ein Herd oder ein Backofen, eine Dunstabzugshaube, eine Kamera oder ein Benutzerendgerät. Die externe Vorrichtung 20 generiert ein Signal S und überträgt dieses an die Geschirrspülmaschine 10. Das Signal S umfasst eine Information, welche indikativ für das in dem Spülbehälter 17 der Geschirrspülmaschine 10 angeordnete Spülgut ist. Beispielsweise verfügt ein intelligenter Kühlschrank 20 über Informationen hinsichtlich der in ihm aufbewahrten Lebensmittel. Aus diesen Informationen kann die spätere Verschmutzung des Spülguts abgeleitet werde. Wenn die externe Vorrichtung 20 beispielsweise ein Benutzerendgerät, wie ein Tablet oder Smartphone ist, über welches der Benutzer seine Einkaufsliste verwalten kann, so kann aus der Einkaufsliste auch das Signal S erzeugt werden, welches indikativ für die Anschmutzung des Spülguts, beispielsweise des Geschirrs, ist.

Die Empfangseinheit 11 der Geschirrspülmaschine 10 ist dazu eingerichtet, das Signal S von der externen Vorrichtung 20 zu empfangen. Die Auswahleinheit 15 ist mit der Empfangseinheit 11 gekoppelt und empfängt von dieser das Signal S. Ferner ist die Auswahleinheit 15 dazu eingerichtet, ein Programm P aus der Mehrzahl der Programme in Abhängigkeit von dem empfangenen Signal S auszuwählen. Mit anderen Worten ist die zu erwartende Anschmutzung des Geschirrs indikativ für das Signal S, wobei das Signal S wiederum indikativ ist für das ausgewählte Programm P.

Die Ansteuereinheit 16 ist dazu eingerichtet, die Aktuatoren 12 - 14 zur Ausführung des gewählten Programms P anzusteuern. Hierzu generiert die Ansteuereinheit 16 vorzugsweise Steuersignale C1 - C3 zur Ansteuerung der Aktuatoren 12 - 14.

Beispielsweise kann die Auswahleinheit 15 auch dazu eingerichtet werden, ein Programm P aus der Mehrzahl der Programme und eine Dosierung eines Spülmittels aus einer Spülmittelzugabe des Haushaltsgerätes 10 in Abhängigkeit von dem empfangenen zumindest einen Signal S zu wählen. Folglich kann das Signal S nicht nur das zu wählende Programm P indizieren, sondern auch die Dosierung des zu verwendenden Spülmittels. In diesem Fall kann die Ansteuereinheit 16 dann dazu eingerichtet werden, die Aktuatoren 12 - 14 zur Ausführung des gewählten Programms P mit der gewählten Dosierung des Spülmittels anzusteuern.

Bei einer weiteren Alternative kann die Auswahleinheit 15 dazu eingerichtet werden, ein Programm P aus der Mehrzahl der Programme, eine Dosierung des Spülmittels und eine Dosierung einer Spülflotte aus einem Flottenspeicher (nicht gezeigt) des Haushaltsgerätes 10 in Abhängigkeit von den empfangenen Signal S zu wählen. Folglich umfasst das Signal S dann eine Information hinsichtlich des zu wählenden Programms hinsichtlich einer Dosierung des Spülmittels und hinsichtlich einer Dosierung der Spülflotte. In diesem Fall kann die Ansteuereinheit 16 dann dazu eingerichtet werden, die Aktuatoren 12-14 zur Ausführung des gewählten Programms P mit der gewählten Dosierung des Spülmittels und der gewählten Dosierung der Spülflotte anzusteuern.

Des Weiteren kann die Empfangseinheit 11 auch dazu eingerichtet werden, eine Mehrzahl von Signalen S von verschiedenen externen Vorrichtungen 20 zu empfangen. Beispielsweise kann die Empfangseinheit 11 ein erstes Signal S von einem Tablet und ein zweites Signal S von einem Kühlschrank empfangen (nicht gezeigt).

In diesem Fall kann die Auswahleinheit 15 dazu eingerichtet werden, ein Programm P aus der Mehrzahl der Programme in Abhängigkeit von einer Mehrzahl der empfangenen Signale S auszuwählen.

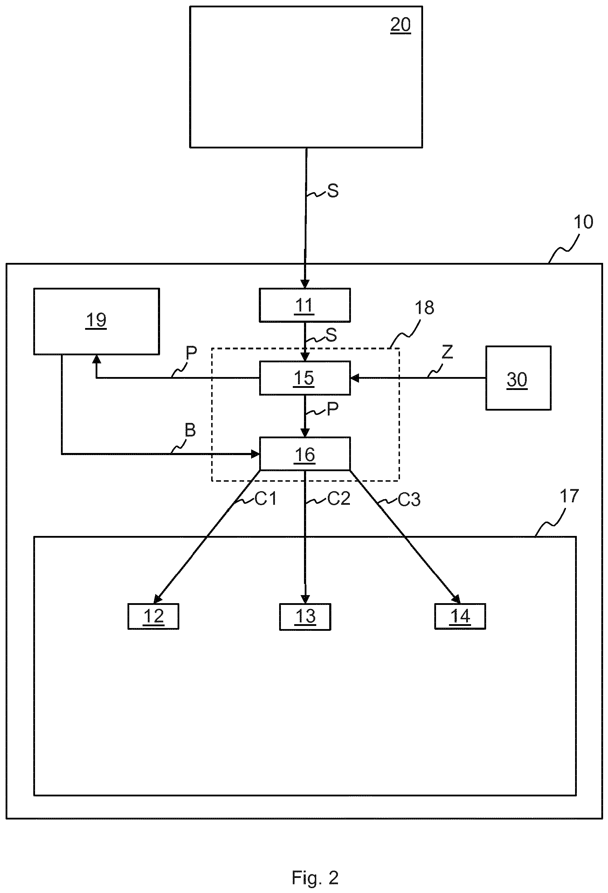

Fig. 2 zeigt eine schematische Ansicht einer zweiten Ausführungsform einer Geschirrspülmaschine 10. Die zweite Ausführungsform der Geschirrspülmaschine 10 gemäß Fig. 2 weist sämtliche Merkmale der ersten Ausführungsform gemäß Fig. 1 und zusätzlich eine Benutzerschnittstelle 19 sowie eine Uhr 30 auf. Die Benutzerschnittstelle 19 ist dazu eingerichtet, das von der Auswahleinheit 15 gewählte Programm P dem Benutzer auszugeben. Hierzu weist die Benutzerschnittstelle 19 beispielsweise einen Bildschirm und/oder einen Lautsprecher auf. Der Benutzer kann über die Benutzerschnittstelle 19 beispielsweise das gewählte Programm P bestätigen oder ablehnen. In Abhängigkeit von den vom Benutzer getätigten Eingaben an der Benutzerschnittstelle 19 generiert diese Befehle B, welche von der Benutzerschnittstelle 19 an die Gerätesteuerung 18 übertragen werden. Mittels der Befehle B kann die Ansteuereinheit 16 der Gerätesteuerung 18 durch die Benutzerschnittstelle 19 gesteuert werden.

Die Uhr 30 ist dazu eingerichtet, eine aktuelle Zeit Z oder einen aktuellen Zeitpunkt Z bereitzustellen. Die Auswahleinheit 15 der Geschirrspülmaschine 10 kann dann dazu eingerichtet werden, das Programm P aus der Mehrzahl der Programme in Abhängigkeit von dem empfangenen zumindest einen Signal S und von dem von der Uhr 30 bereitgestellten Zeitpunkt Z zu wählen.

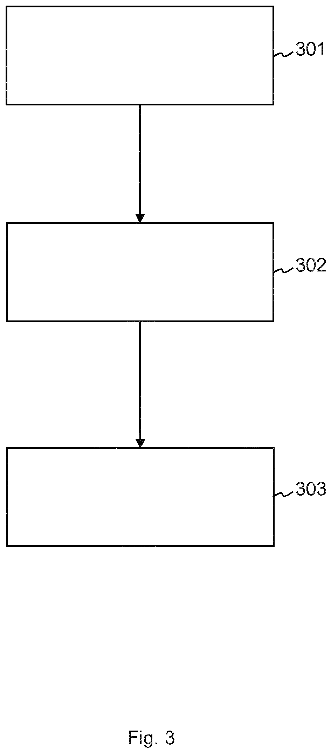

In Fig. 3 ist ein schematisches Ablaufdiagramm eines Ausführungsbeispiels eines Verfahrens zum Betreiben einer Geschirrspülmaschine 10 dargestellt. Die Geschirrspülmaschine 10 hat eine Anzahl von Aktuatoren 12 - 14 zur Durchführung einer Mehrzahl von Programmen. Das Verfahren gemäß der Fig. 3 umfasst die folgenden Schritte 301 - 303: In Schritt 301 wird zumindest ein Signal S von einer mit dem Haushaltsgerät 10 gekoppelten Vorrichtung 20 empfangen. Das Haushaltsgerät 10 und die externe gekoppelte Vorrichtung 20 sind beispielsweise wie in den Ausführungsbeispielen der Fig. 1 oder 2 ausgebildet.

In Schritt 302 wird ein Programm P aus der Mehrzahl der Programme in Abhängigkeit von dem empfangenen zumindest einen Signal S ausgewählt.

In Schritt 303 werden die Aktuatoren 12 - 14 des Haushaltsgerätes 10 derart angesteuert, dass das gewählte Programm P ausgeführt wird.

### Verwendete Bezugszeichen:

- 10: wasserführendes Haushaltsgerät, ausgebildet als Geschirrspülmaschine
- 11: Empfangseinheit
- 12: Aktuator
- 13: Aktuator
- 14: Aktuator
- 15: Auswahleinheit
- 16: Ansteuereinheit
- 17: Spülbehälter
- 18: Gerätesteuerung
- 20: Vorrichtung
- 30: Uhr
- S: Signal
- B: Befehle
- C1 - C3: Ansteuersignal
- P: Programm
- Z: Zeitpunkt

## Patentansprüche

1. Wasserführendes Haushaltsgerät (10), das als eine Geschirrspülmaschine ausgebildet ist, mit:
einer Empfangseinheit (11) zum Empfangen zumindest eines Signals (S) von einer mit dem Haushaltsgerät (10) gekoppelten externen Vorrichtung (20), **dadurch gekennzeichnet, dass** das Signal (S) eine Information enthält, welche indikativ für ein in einem Spülbehälter (17) der Geschirrspülmaschine (10) angeordnetes Spülgut und/oder eine Anschmutzung des Spülguts ist,
einer Anzahl von Aktuatoren (12 - 14) zur Durchführung einer Mehrzahl von Programmen,
einer Auswahleinheit (15) zum Wählen eines Programms (P) aus der Mehrzahl der Programme in Abhängigkeit von dem empfangenen zumindest einen Signal (S), und einer Ansteuereinheit (16), welche dazu eingerichtet ist, die Aktuatoren (12 - 14) zur Ausführung des gewählten Programms (P) anzusteuern.

2. Wasserführendes Haushaltsgerät nach Anspruch 1, **dadurch gekennzeichnet, dass** die Auswahleinheit (15) dazu eingerichtet ist, ein Programm (P) aus der Mehrzahl der Programme und eine Dosierung eines Spülmittels aus einer Spülmittelzugabe des Haushaltgeräts (10) in Abhängigkeit von dem empfangenen zumindest einen Signal (S) zu wählen.

3. Wasserführendes Haushaltsgerät nach Anspruch 2, **dadurch gekennzeichnet, dass** die Ansteuereinheit (16) dazu eingerichtet ist, die Aktuatoren (12 - 14) zur Ausführung des gewählten Programms (P) mit der gewählten Dosierung des Spülmittels anzusteuern.

4. Wasserführendes Haushaltsgerät nach Anspruch 1, **dadurch gekennzeichnet, dass** die Auswahleinheit (15) dazu eingerichtet ist, ein Programm (P) aus der Mehrzahl der Programme, eine Dosierung eines Spülmittels aus der Spülmittelzugabe und eine Dosierung einer Spülflotte aus einem Flottenspeicher des Haushaltsgeräts (10) in Abhängigkeit von dem empfangenen zumindest einen Signal (S) zu wählen.

5. Wasserführendes Haushaltsgerät nach Anspruch 4, **dadurch gekennzeichnet, dass** die Ansteuereinheit (16) dazu eingerichtet ist, die Aktuatoren (12 - 14) zur Ausführung des gewählten Programms (P) mit der gewählten Dosierung des Spülmittels und der gewählten Dosierung der Spülflotte anzusteuern.

6. Wasserführendes Haushaltsgerät nach einem der Ansprüche 1 bis 5, **gekennzeichnet durch** eine mit
der Auswahleinheit (15) gekoppelte Benutzerschnittstelle (19) zum Ausgeben des von der Auswahleinheit (15) gewählten Programms (P) und zum Steuern der Ansteuereinheit (16).

7. Wasserführendes Haushaltsgerät nach einem der Ansprüche 1 bis 6, **dadurch gekennzeichnet, dass** die Auswahleinheit (15) dazu eingerichtet ist, ein Programm (P) aus der Mehrzahl der Programme in Abhängigkeit von dem empfangenen zumindest einen Signal (S) und eines aktuellen Zeitpunkts (Z) zu wählen.

8. Wasserführendes Haushaltsgerät nach einem der Ansprüche 1 bis 7, **dadurch gekennzeichnet, dass** die Empfangseinheit (11) dazu eingerichtet ist, eine Mehrzahl von Signalen (S) von einer Mehrzahl von mit dem Haushaltsgerät (10) gekoppelten Vorrichtungen (20) zu empfangen.

9. Wasserführendes Haushaltsgerät nach Anspruch 8, **dadurch gekennzeichnet, dass** die Auswahleinheit (15) dazu eingerichtet ist, ein Programm (P) aus der Mehrzahl der Programme in Abhängigkeit von der Mehrzahl der empfangenen Signale (S) auszuwählen.

10. Wasserführendes Haushaltsgerät nach einem der Ansprüche 1 bis 9, **dadurch gekennzeichnet, dass** die mit dem Haushaltsgerät (10) gekoppelte Vorrichtung (20) ein Kältegerät, ein Gargerät, eine Dunstabzugshaube, eine Kamera oder ein Benutzerendgerät ist.

11. Verfahren zum Betreiben des wasserführenden Haushaltsgeräts (10) gemäß einem der vorhergehenden Ansprüche, welches als eine Geschirrspülmaschine ausgebildet ist und eine Anzahl von Aktuatoren (12 - 14) zur Durchführung einer Mehrzahl von Programmen aufweist, mit den Schritten: Empfangen (301) zumindest eines Signals (S) von einer mit dem Haushaltsgerät (10) gekoppelten externen Vorrichtung (20), wobei das Signal (S) eine Information enthält, welche indikativ für ein in einem Spülbehälter (17) der Geschirrspülmaschine (10) angeordnetes Spülgut und/oder eine Anschmutzung des Spülguts ist,
Wählen (302) eines Programms (P) aus der Mehrzahl der Programme in Abhängigkeit von dem empfangenen zumindest einen Signal (S), und
Ansteuern (303) der Aktuatoren (12 - 14) derart, dass das gewählte Programm (P) ausgeführt wird.

## Claims

1. Water-carrying household appliance (10), which is embodied as a dishwasher, with:
a receiving unit (11) for receiving at least one signal (S) from an external device (20) coupled to the household appliance (10), **characterised in that** the signal (S) contains an item of information which is indicative of an item to be washed arranged in a dishwasher cavity (17) of the dishwasher (10) and/or a soiling of the item to be washed,
a number of actuators (12 - 14) for executing a plurality of programs,
a selector unit (15) for selecting a program (P) from the plurality of programs as a function of the at least one signal (S) received, and a control unit (16) which is equipped to control the actuators (12 - 14) for executing the selected program (P).

2. Water-carrying household appliance according to claim 1, **characterised in that** the selector unit (15) is equipped to select a program (P) from the plurality of programs and a dosage of a detergent from a detergent allowance of the household appliance (10) as a function of the at least one signal (S) received.

3. Water-carrying household appliance according to claim 2, **characterised in that** the control unit (16) is equipped to control the actuators (12 - 14) for executing the selected program (P) with the selected dosage of the detergent.

4. Water-carrying household appliance according to claim 1, **characterised in that** the selector unit (15) is equipped to select a program (P) from the plurality of programs, a dosage of a detergent from a detergent allowance and a dosage of a washing liquor from a liquor reservoir of the household appliance (10) as a function of the at least one signal (S) received.

5. Water-carrying household appliance according to claim 4, **characterised in that** the control unit (16) is equipped to control the actuators (12 - 14) for executing the selected program (P) with the selected dosage of the detergent and the selected dosage of the washing liquor.

6. Water-carrying household appliance according to one of claims 1 to 5, **characterised by** a user interface (19) coupled to the selector unit (15) for outputting the program (P) selected by the selector unit (15) and for controlling the control unit (16).

7. Water-carrying household appliance according to one of claims 1 to 6, **characterised in that** the selector unit (15) is equipped to select a program (P) from the plurality of programs as a function of the at least one signal (S) received and a current point in time (Z).

8. Water-carrying household appliance according to one of claims 1 to 7, **characterised in that** the receiving unit (11) is equipped to receive a plurality of signals (S) from a plurality of devices (20) coupled to the household appliance (10).

9. Water-carrying household appliance according to claim 8, **characterised in that** the selector unit (15) is equipped to select a program (P) from the plurality of programs as a function of the plurality of signals (S) received.

10. Water-carrying household appliance according to one of claims 1 to 9, **characterised in that** the device (20) coupled to the household appliance (10) is a refrigeration appliance, a cooking appliance, an extractor hood, a camera or a user terminal.

11. Method for operating the water-carrying household appliance (10) according to one of the preceding claims, which is embodied as a dishwasher and has a number of actuators (12 - 14) for executing a plurality of programs, with the steps:
Receiving (301) at least one signal (S) from an external device (20) coupled to the household appliance (10), wherein the signal (S) contains an item of information which is indicative of an item to be washed arranged in a dishwasher cavity (17) of the dishwasher (10) and/or a soiling of the item to be washed,
Selecting (302) a program (P) from the plurality of programs as a function of the at least one signal (S) received, and
Controlling (303) the actuators (12 - 14) such that the selected program (P) is executed.

## Revendications

1. Appareil électroménager à circulation d'eau (10) qui est configuré sous la forme d'une machine à laver la vaisselle, avec :
une unité de réception (11) pour la réception d'au moins un signal (S) d'un dispositif externe (20) couplé à l'appareil électroménager (10), **caractérisé en ce que** le signal (S) contient une information qui indique un article à laver disposé dans une cuve de lavage (17) de la machine à laver la vaisselle (10) et/ou une salissure de l'article à laver,
une pluralité d'actionneurs (12 à 14) pour la mise en oeuvre d'une pluralité de programmes,
une unité de sélection (15) pour la sélection d'un programme (P) parmi la pluralité des programmes en fonction de l'au moins un signal (S) reçu, et
une unité d'activation (16) qui est conçue pour activer les actionneurs (12 à 14) pour l'exécution du programme (P) sélectionné.

2. Appareil électroménager à circulation d'eau selon la revendication 1, **caractérisé en ce que** l'unité de sélection (15) est conçue pour sélectionner un programme (P) parmi la pluralité des programmes et un dosage d'un produit de lavage à partir d'un ajout de produit de lavage de l'appareil électroménager (10) en fonction de l'au moins un signal (S) reçu.

3. Appareil électroménager à circulation d'eau selon la revendication 2, **caractérisé en ce que** l'unité d'activation (16) est conçue pour activer les actionneurs (12 à 14) pour l'exécution du programme (P) sélectionné avec le dosage sélectionné du produit de lavage.

4. Appareil électroménager à circulation d'eau selon la revendication 1, **caractérisé en ce que** l'unité de sélection (15) est conçue pour sélectionner un programme (P) parmi la pluralité des programmes, un dosage d'un produit de lavage à partir de l'ajout de produit de lavage et un dosage d'un bain de lavage à partir d'un réservoir de bain de l'appareil électroménager (10) en fonction de l'au moins un signal (S) reçu.

5. Appareil électroménager à circulation d'eau selon la revendication 4, **caractérisé en ce que** l'unité d'activation (16) est conçue pour activer les actionneurs (12 à 14) pour l'exécution du programme (P) sélectionné avec le dosage sélectionné du produit de lavage et le dosage sélectionné du bain de lavage.

6. Appareil électroménager à circulation d'eau selon l'une des revendications 1 à 5, **caractérisé par** une interface utilisateur (19) couplée à l'unité de sélection (15) pour la délivrance du programme (P) sélectionné par l'unité de sélection (15) et pour la commande de l'unité d'activation (16).

7. Appareil électroménager à circulation d'eau selon l'une des revendications 1 à 6, **caractérisé en ce que** l'unité de sélection (15) est conçue pour sélectionner un programme (P) parmi la pluralité des programmes en fonction de l'au moins un signal (S) reçu et d'un instant actuel (Z).

8. Appareil électroménager à circulation d'eau selon l'une des revendications 1 à 7, **caractérisé en ce que** l'unité de réception (11) est conçue pour recevoir une pluralité de signaux (S) d'une pluralité de dispositifs (20) couplés à l'appareil électroménager (10).

9. Appareil électroménager à circulation d'eau selon la revendication 8, **caractérisé en ce que** l'unité de sélection (15) est conçue pour sélectionner un programme (P) parmi la pluralité des programmes en fonction de la pluralité des signaux (S) reçus.

10. Appareil électroménager à circulation d'eau selon l'une des revendications 1 à 9, **caractérisé en ce que** le dispositif (20) couplé à l'appareil électroménager (10) est un appareil de réfrigération, un appareil de cuisson, une hotte aspirante, un appareil photographique ou un terminal utilisateur.

11. Procédé servant à faire fonctionner l'appareil électroménager à circulation d'eau (10) selon l'une des revendications précédentes, lequel est configuré sous la forme d'une machine à laver la vaisselle et comprend une pluralité d'actionneurs (12 à 14) pour la mise en oeuvre d'une pluralité de programmes, avec les étapes suivantes :
réception (301) d'au moins un signal (S) d'un dispositif externe (20) couplé à l'appareil électroménager (10), dans lequel le signal (S) contient une information qui indique un article à laver disposé dans une cuve de lavage (17) de la machine à laver la vaisselle (10) et/ou une salissure de l'article à laver,
sélection (302) d'un programme (P) parmi la pluralité des programmes en fonction de l'au moins un signal (S) reçu, et
activation (303) des actionneurs (12 à 14), de telle sorte que le programme (P) sélectionné soit exécuté.
